# EUROPÄISCHE PATENTSCHRIFT

(11) **EP 0 968 072 B1**
(45) Veröffentlichungstag und Bekanntmachung des Hinweises auf die Patenterteilung: **09.07.2003**
(21) Anmeldenummer: 98916970.1
(22) Anmeldetag: 17.03.1998
(51) Int. Cl.: B23K 35/14, B23K 35/30

(54) **LOTPASTE ZUR ERZEUGUNG KONTURENGENAUER GEOMETRISCHER METALLSTRUKTUREN**
SOLDERING PASTE FOR PRODUCING GEOMETRICAL METAL STRUCTURES WITH PRECISE CONTOURS
PATE A BRASER POUR LA PRODUCTION DE STRUCTURES METALLIQUES GEOMETRIQUES AUX CONTOURS PRECIS

(30) Priorität: 20.03.1997 DE 19711562
(43) Veröffentlichungstag der Anmeldung: 05.01.2000
(73) Patentinhaber: BrazeTec GmbH, 63457 Hanau (DE); Federal-Mogul Sealing Systems GmbH, 57562 Herdorf (DE)
(72) Erfinder: KOCH, Jürgen, D-63165 Mühlheim (DE); KOSCHLIG, Manfred, D-63743 Aschaffenburg (DE); KRAPPITZ, Harald, D-63457 Hanau (DE); WEBER, Wolfgang, D-63791 Karlstein (DE); LÖNNE, Klaus, D-51399 Burscheid (DE); SCHMITT, Klaus, D-57520 Grünebach (DE)
(74) Vertreter: VOSSIUS & PARTNER
(86) Internationale Anmeldenummer: EP9801530
(87) Internationale Veröffentlichungsnummer: WO98042476

(56) Entgegenhaltungen:
- EP-A- 0 331 500
- DE-A- 3 018 007
- DE-A- 4 315 475
- US-A- 4 606 495
- US-A- 4 919 730
- US-A- 5 561 827

## Beschreibung

Die Erfindung betrifft eine Lotpaste zum Erzeugen konturengenauer geometrischer Metallstrukturen auf metallischen Unterlagen durch Auftraglöten.

DE-A-43 15 475 beschreibt eine Lotsuspension zum Aufbringen dünner Lotschichten auf Unterlagen. Die Lotsuspension enthält u.a. ein Lotpulver, das eine Teilchengröße von 5 bis 50 µm aufweist, wobei 55 bis 70 % der Teilchen kleiner als die Teilchengröße im Maximum der Teilchengrößenverteilungskurve sind. Außerdem muß das Verhältnis zwischen mittlerer Teilchengröße des Lotpulvers und der Dichte des Lotpulvers zwischen 0.1 und 20 liegen.

In der Technik werden seit langem Lotpasten zum stoffschlüssigen Verbinden verschiedener Werkstoffe eingesetzt. Je nach Grundmaterial und Anwendungsfall werden hierzu unterschiedliche Lotlegierungen in Pulverform mit einem organischen Bindemittel als Trägermaterial abgebunden und in Form einer pastösen Masse auf die zu fügenden Werkstücke aufgebracht. Der Auftrag kann hierbei je nach Anforderung an die Gleichförmigkeit und Dicke der Schicht beispielsweise durch Dispensen, Siebdrucken, Tauchen oder Spritzen erfolgen. Bei einer anschließenden Wärmebehandlung wird das organische Bindemittel vollständig ausgebrannt und das Lot verbindet nach Erreichen der schmelzflüssigen Phase die Werkstücke stoffschlüssig miteinander. Die Benetzung der Grundmaterialien durch das flüssige Lot kann durch Zusatz von Flußmitteln zur Lotpaste gefördert werden.

Das gleiche Verfahren kann auch zum stoffschlüssigen, flächigen Beschichten einer einzelnen Werkstückoberfläche eingesetzt werden. Durch das sogenannte Auftraglöten kann auf dem Grundwerkstoff eine gleichmäßige Lotschicht erzeugt werden. Diese Technik wird bevorzugt dann angewendet, wenn das Grundmaterial gegenüber schädlichen Einflüssen der Umgebung geschützt werden soll, etwa beim Verzinnen von Kupfer-, Stahl- oder Messingblechen zum Schutz vor

Korrosion, beim Beschichten von Turbinenschaufeln zur Verhinderung eines abrasiven Verschleißes. Das zur Beschichtung verwendete Lot kann dabei entweder im geschmolzenen Zustand (z.B. Lotbadlöten, Schlepplöten, Flammspritzen etc.) oder in Form einer Suspension oder Lotpaste aufgebracht werden. Die DE 43 15 475 A1 beschreibt eine Lotsuspension zum Aufbringen dünner Lotschichten auf Unterlagen. Dort werden Lotpulver mit einer speziellen Kornverteilung in einem organischen Bindemittel suspendiert, durch Tauchen, Spritzen oder Pinseln auf die zu beschichtenden Oberflächen aufgetragen und anschließend mit der Unterlage verlötet.
Durch Tauchen, Pinseln oder Spritzen können jedoch nur großflächige oder grobe Strukturen auf den Unterlagen erzeugt werden. Mit bekannten Lotpasten, die in ihrer Viskosität und Rheologie speziell eingestellt sind, können konturenscharfe Strukturen in Mikrometerbereich beispielsweise auch im Siebdruck aufgebracht werden. Im nachfolgenden Aufschmelzprozeß gehen Kontur, Kantensteilheit und Kantenschärfe der aufgedruckten Lotschicht jedoch verloren, da sich das flüssige Lot infolge des Benetzungsvorgangs irreversibel auf der Oberfläche des Grundwerkstoffes ausbreitet. Das Ausmaß der Lotausbreitung ist von der Benetzbarkeit des Grundwerkstoffes und der Oberflächenspannung des geschmolzenen Lotes abhängig. Dieses Verhalten ist mehr oder weniger ausgeprägt bei allen Kombinationen von Lot und Grundwerkstoff zu beobachten. Die Fließeigenschaft des Lotes nach Erreichen der Liquidustemperatur ist insbesondere dann unerwünscht, wenn die siebgedruckten konturengenauen Lotschichten während des Lötprozesses allenfalls normal zur Werkstoffoberfläche schrumpfen dürfen, d.h. die durch den Binderausbrand und den Sinterund Schmelzprozeß bedingte Reduzierung des Pastenvolumens sich nur in einer Verringerung der Schichdicke bemerkbar machen darf, und ein Ausbreiten des geschmolzenen Lotes auf der Unterlage über die vorgegebenen Strukturgrenzen hinaus ausgeschlossen werden muß. Eine typische Anwendungen ist beispielsweise das Aufbringen von räumlich abgegrenzten und in der Höhe exakt festgelegten Distanzhaltern oder Verdickungen, die stoffschlüssig mit metallischen Unterlagen verbunden sind. Technische Anwendung können derartige, durch Auftraglöten erzeugte Abstandshalter bzw. Verdickungen in der Herstellung von Mehrlagen-Stahldichtungen finden. Für diesen Einsatzzweck müssen räumlich begrenzte, konturengenaue Erhöhungen auf Metallagen erzeugt werden, die in der Mehrlagen-Stahldichtung eine sichere Abdichtung gewährleisten.

In DE 44 40 503 C1 sowie in DE 195 28 031 sind ein- oder mehrlagige Flachdichtungen beschrieben, die zur Sicherstellung der Dichtwirkung räumlich definierte Verdickungsringe aufweisen, die durch Aufsintern oder durch Aufschmelzen von Lotmaterialien zu erzeugen sind. Diesen Druckschriften ist jedoch nicht zu entnehmen, wie hierfür etwa einsetzbare, siebdruckfähige Lotpasten zusammengesetzt und welche Kriterien erfüllt sein müssen, damit mit diesen definierten Strukturen konturengenau erzeugt werden können.

Es war daher Aufgabe der vorliegenden Erfindung, eine Lotpaste zum Erzeugen konturengenauer metallischer Strukturen zu entwickeln, die durch Siebdruck konturenscharf auf eine metallische Unterlage aufgebracht werden kann und die die vorgegebene Struktur während des Lötprozesses in der zweidimensionalen Ausdehnung exakt beibehält. Neben dieser wesentlichen Forderung an die Lotpaste ist weiterhin bei einigen Anwendungen die Oberflächenrauhigkeit, Schichtdicke und Planarität der erzeugten Strukturen von großer Bedeutung. Dies ist insbesondere dann der Fall, wenn diese Schichten wie im Falle von Mehrlagenstahl-Dichtungen eine Abdichtfunktion übernehmen müssen. Hier darf die mittlere Oberflächenrauhigkeit nach dem Lötprozeß bei einer Schichtdicke von 25 bis 250 µm einen Grenzwert von 15 µm Rauhtiefe (gemittelte Rauhtiefe R_{z} nach DIN 4768) nicht überschreiten. Zusätzlich müssen die aufgelöteten Strukturen bis zu Maximaltemperaturen von 300°C auch unter Belastung und mechanischer Beanspruchung konturenstabil bleiben, was nur erreicht werden kann, wenn die erfindungsgemäße Lotpaste nach dem Lötvorgang keine Poren oder sonstige verformbaren Anteile in der Schicht zurückläßt.

Es wurde nun gefunden, daß diese Anforderungen von einer siebdruckfähigen Lotpaste erfüllt werden, die in einem organischen Bindersystem 80 bis 95 Gew.% eines Gemisches aus einem Nickelbasislot und einer pulverförmigen Legierung von Nickel mit einem der Elemente Chrom, Molybdän, Wolfram, Mangan oder Eisen als höherschmelzenden metallischen Füllstoff enthält, und die dadurch gekennzeichnet ist, daß das Massenverhältnis von Lot zu Füllstoff 2 bis 6:1, die mittlerer Korngröße des Lotes zwischen 10 und 50 µm und das Korngrößenverhältnis, bezogen auf die mittlere Korngröße, von Lot zu Füllstoff 0,5 bis 2,5:1 beträgt.

Gegenstand der Erfindung ist somit eine wie vorstehend charakterisierte Lotpaste zur Erzeugung konturengenauer geometrischer Metallstrukturen.

Gegenstand der Erfindung ist weiterhin die Verwendung einer derartigen Lotpaste zur Herstellung konturengenauer geometrischer Metallstrukturen auf metallischen Unterlagen durch Auftraglöten.

Gegenstand der Erfindung ist darüberhinaus ein Verfahren zur Herstellung konturengenauer geometrischer Metallstrukturen auf metallischen Unterlagen durch Auftraglöten, wobei man auf der Unterlage Strukturen aus einer solchen Lotpaste durch Siebdruck aufträgt, die Strukturen trocknet und in einer anschließenden Wärmebehandlung das in der Lotpaste enthaltene organische Bindemittelsystem rückstandsfrei zersetzt und dann bis zur Verflüssigung des Lotmaterials erhitzt.

Die erfindungsgemäße Lotpaste enthält ein pulverförmiges Lot und einen höherschmelzenden pulverförmigen metallischen Füllstoff in einem organischen Bindersystem. Das Lot ist ein pulverförmiges Nickelbasislot mit mittlerer Korngröße zwischen 10 und 50 µm, vorzugsweise zwischen 25 und 45 µm. Grundsätzlich sind alle Nickelbasislote geeignet, die in einem Bereich zwischen 850 und 1100°C erschmelzen. Nickelbasislote sind dem Fachmann bekannt und können von ihm ohne weiteres, den Anforderungen entsprechend für den erfindungsgemäßen Zweck ausgewählt werden. Der metallische Füllstoff ist eine pulverförmige Legierung von Nickel mit einem der Elemente Chrom, Molybdän, Wolfram, Mangan oder Eisen. Erfindungsgemäß liegt das Massenverhältnis von Lot zu Füllstoff bei 2 bis 6:1 und das Korngrößenverhältnis, bezogen auf die mittlere Korngröße, bei 0,5 bis 2,5:1.
Vorzugsweise liegt das Massenverhältnis bei 3,5 bis 4,5:1 und das Korngrößenverhältnis bei 1,0 bis 2,0:1. Die Partikelform von Lot- und Füllstoffpulver sollte weitgehend von kugeliger Gestalt sein. Derartige Metallpulver mit kugeliger Partikelform und definierter Korngröße können nach an sich bekannten Verfahren hergestellt werden, beispielsweise durch Versprühen entsprechender Legierungsschmelzen und anschließendes Sieben bzw. Klassieren. Die in Frage kommenden Füllstofflegierungen haben generell einen Schmelzpunkt über 1300°C. Als Füllstoff geeignete Nickellegierungen sind dem Fachmann bekannt und können von ihm ohne weiteres, den Anforderungen entsprechend für den erfindungsgemäßen Zweck ausgewählt werden. Bevorzugt werden als Füllstoff Nickel-Chrom-Legierungen eingesetzt. Als besonders vorteilhaft im Hinblick auf die Anforderungen bei der Herstellung von Abstandhaltern in Mehrlagen-Stahldichtungen hat sich erwiesen, wenn die metallische Komponente der Lotpaste aus einem Nickelbasislot der Zusammensetzung Ni82,4Cr7Fe3Si4,5B3,1 oder Ni76Cr14P10 und einer Nickel-Chrom-Legierung der Zusammenstzung Ni80Cr20 als Füllstoff besteht.

Die erfindungsgemäße Lotpaste wird in der Weise hergestellt, daß man zunächst Lotpulver und Füllstoff im angegebenen Massenverhältnis intensiv mischt und dann dieses Gemisch in einem organischen Bindersystem dispergiert. Bindersysteme zur Herstellung von Lotpasten sind an sich bekannt. Zur Erzielung einer siebdruckfähigen Konsistenz der Paste ist es erforderlich, daß diese 80 bis 95 Gew.% des Metallpulvergemisches enthält. Das Bindemittelsystem kann 1 bis 15 Gew.% eines organischen Bindemittels enthalten, das in einem organischen Lösungsmittel gelöst ist. Üblicherweise besteht das Bindersystem aus einer Lösung eines polymeren organischen Bindemittels, z.B. aus der Klasse der Polyacrylate, Polyisobutylene oder Zellulosederivate, in einem organischen Lösungsmittel mit Verdunstungszahlen von 1000 bis 20000. Typische Lösungsmittel sind hochsiedende aliphatische Kohlenwasserstoffe, Glykole, Glykolether oder höhersiedende Alkohole. Die kinematische Viskosität der Lotpaste wird über den Gesamtmetallgehalt auf den zum Siebdruck erforderlichen Wert von 10 bis 50 Pa·s eingestellt. Durch Zusatz von rheologisch wirksamen Additiven zum Bindersystem, z.B. Rizinusölderivaten, kann das Druckverhalten der Lotpaste so gesteuert werden, daß die durch Siebdruck aufgebrachten Strukturen infolge des thixotropen Verhaltens der Lotpaste, im feuchten Zustand und auch während des Trockenschrittes nicht verlaufen.

Selbstverständlich können die erfindungsgemäße Lotpasten noch weitere, in der Lottechnik übliche Zusatzstoffe wie etwa Flußmittel, Verlaufshilfsmittel etc. enthalten.

Man erhält durch die erfindungsgemäße Wahl von Korngrößenund Mischungsverhältnisse druckbare Lotpasten, mit denen durch Siebdruck konturenscharfe, riß- und porenfreie Strukturen auf metallischen Unterlagen erzeugt werden können. Hierbei zeigt sich, daß die Lotpaste bereits im feuchten Zustand die Unterlagen gut benetzt und nach dem Trocknen ohne zu Verlaufen eine festhaftende Schicht bildet. Als Grundmaterialien kommen vornehmlich, beispielsweise für die Anwendung als Dichtungsmaterial, 0.10 bis 1.20 mm dicke Blechlagen aus Edelstählen 1.4301, 1.4016, 1.4512 sowie vernickeltes Kaltband 1.0338 und härtbare Edelstähle zum Einsatz. Nach dem Aufdrucken der Strukturen werden die Bauteile in einem Ofen getrocknet, etwa 15 bis 30 Minuten bei 120 bis 180°C, und anschließend beispielsweise in einem Durchlaufofen unter reduzierender Atmosphäre, etwa unter Wasserstoff, bei 1050°C stoffschlüssig mit der Unterlage verlötet. Das organische Bindemittel zersetzt sich während des Aufheizprozesses rückstandsfrei. Die aufgebrachten Strukturen schmelzen anschließend im Bereich von 850 bis 1100°C zu einer glatten Schicht auf ohne daß das Lot auf der Unterlage verläuft.

Überraschenderweise hat sich gezeigt, daß durch Verwendung der erfindungsgemäßen Lotpaste konturengenaue Strukturen durch Auftraglöten hergestellt werden können, wobei die durch Siebdruck konturenscharf auf eine metallische Unterlage aufgebrachten Strukturen auch während des Lötprozesses und danach ihre zwei- bzw. dreidimensionale Gestalt konturengenau und weitgehend kantenscharf beibehalten.

Sowohl das Korngrößen- als auch das Mischungsverhältnis von Lot zu Füllstoff haben entscheidenden Einfluß auf die Oberflächenrauhigkeit und die Planparallelität der durch Auftraglöten erzeugten Schicht. Es hat sich herausgestellt, daß man auftraggelötete Strukturen mit Schichtdicken von 25 bis 250 µm und insbesondere von 50 bis 150 µm mit einer Rauhigkeit (gemittelte Rauhtiefe R_{z} nach DIN 4768) von nicht mehr als 15 µm und einer vorzüglichen Planparallelität erzeugen kann, wenn das erfindungsgemäße Korngrößen- und Mischungsverhältnis von Lot zu Füllstoff eingehalten wird.

Erstaunlich ist der Befund, daß sich bei metallographischen Untersuchungen der erzeugten Lotstrukturen die ursprünglich in der Lotpaste enthaltenen Füllstoffpartikel praktisch nicht mehr wiederfinden. Statt dessen finden sich neugebildete nadelige Kristallgebilde in der Lotmatrix eingebettet, die eine andere Elementzusammensetzung als die ursprüngliche Füllstofflegierung aufweisen. Offenbar legieren die an sich höherschmelzenden Füllstoffpartikel mit dem Lot unter Bildung anders zusammengesetzter Kristallitstrukturen.

Im Falle der Füllstofflegierung der Zusammensetzung Ni80Cr20 haben sich nadelige Kristallite der Zusammensetzung Ni20Cr80 gebildet. Es wird angenommen, daß dieser Vorgang maßgeblich für die Ausbildung konturenscharfer unporöser Lotstrukturen ist.

Folgende Beispiele sollen die Erfindung näher erläutern:

### Beispiel 1

144 g Nickelbasislot L-Ni2 der Legierungszusammensetzung Ni82.4Cr7Fe3Si4.5B3.1 mit einer mittleren Korngröße von 35 µm werden mit 36 g Ni80Cr20-Füllstoffpulver mit einer mittleren Korngröße von 17 µm in einem Taumelmischer 30 Minuten homogenisiert. Das Mischungsverhältnis Lot/Füllstoff beträgt 4,0:1, das Korngrößenverhältnis Lot/Füllstoff beträgt 2,0:1. Die Pulvermischung wird anschließend mit einem Dissolver bei 3000 rpm in 20 g eines Bindersystem, bestehend aus 15 % Polyisobutylen, 1% Thixotropiermittel (Crayvallac SF), Rest Leichtbenzin, unter kräftigem Rühren eingebracht. Zur vollständigen Dispergierung wird noch 30 Minuten nachgerührt. Nach Abkühlen auf Raumtemperatur wird die Viskosität durch Zugabe eines Verdünners auf 30 Pa·s eingestellt.

Die Paste ist über mehrere Monate ohne Separation lagerstabil. Sie wird im Siebdruck (Siebparameter: 21T, 150 µm Maschenweite) ringförmig um eine Ausstanzung auf eine Blechlage aus 1.4301-Edelstahl konturenscharf aufgedruckt und im Trockenschrank für 15 Minuten bei 130°C getrocknet. Nach dem Trocknen ist die Schicht haftfest mit der Unterlage verbunden. Die Trockenschichtdicke der riß- und porenfreien Ringstruktur beträgt 125 µm, die Breite 2.5 mm. Anschließend wird das Bauteil unter Wasserstoff bei 1050°C Peaktemperatur gelötet. Die resultierende Schichtdicke wird an mehreren Stellen der ringförmigen Lotschicht bestimmt und beträgt im Mittelwert 86 ± 10 µm. Die Rauhtiefe Rz ist kleiner 10 µm, wobei die Schicht im Querschnitt eine zur Unterlage planparallele Breite von 1.5 mm aufweist. Die Gesamtbreite liegt unverändert bei 2.5 mm.

### Beispiel 2

63.75 g Nickelbasislot L-Ni2 der Legierungszusammensetzung Ni82.4Cr7Fe3Si4.5B3.1 mit einer mittleren Korngröße von 39 µm werden mit 21.25 g Ni80Cr20-Füllstoffpulver mit einer mittleren Korngröße von 32 µm in einem Taumelmischer 30 Minuten homogenisiert. Das Mischungsverhältnis Lot/Füllstoff beträgt 3,0:1, das Korngrößenverhältnis Lot/Füllstoff beträgt 1,2:1. Die Pulvermischung wird anschließend mit einem handelsüblichen Dispergierapparat bei 3000 rpm in 15 g eines Bindersystems, bestehend aus einer Lösung von 5 g Polybutylmethacrylat (Molgewicht 110000 g/mol) und 1 g Rheocin (Rizinusölderivat, Fa. C.H. Erbslöh) in 94 g Texanol, eingerührt und nach 30 Minuten Rühren auf Raumtemperatur abgekühlt. Die Viskosität wird durch Zugabe von Texanol auf 18 Pa·s eingestellt.

Die Paste wird im Siebdruck auf ein vernickeltes Kaltband (1.0338) in Form eines 4.8 mm breiten Ringes um eine runde Ausstanzung von 100 mm Durchmesser aufgedruckt und bei 150 °C getrocknet. Die Schichtdicke vor dem Löten beträgt 61 µm mit einer Dickenschwankung von ± 3µm. Nach dem Löten bei 1050°C im Durchlaufofen unter Wasserstoff beträgt die Schichtdicke 53 µm, die Rauhigkeit liegt bei 15 µm. Die graphische Auswertung des Konturschriebs im Querschnitt durch den aufgelöteten Ring ergibt eine zur Unterlage planparallele Breite von 2.6 mm.

### Beispiel 3

146 g des Nickelbasislotes L-Ni7 der Zusammensetzung Ni76Cr14P10 mit einer mittleren Korngröße von 40 µm werden in einem Taumelmischer mit 34 g Ni80Cr20 mit einer mittleren Korngröße von 25 µm 20 Minuten lang intensiv gemischt. Das Verhältnis Lot/Füllstoff beträgt 4,3:1, das Korngrößenverhältnis Lot/Füllstoff beträgt 1,6:1. Die Pulvermischung wird anschließend mit einem Dissolver bei 2500 rpm in 20g eines Bindemittels, bestehend aus einer 1.5%-igen Lösung von Hydroxypropylcellulose in Dipropylenglykol, eingerührt und zur vollständigen Verteilung 15 Minuten dispergiert. Die Temperatur darf hierbei 40°C nicht übersteigen. Nach Abkühlen auf Raumtemperatur wird die Viskosität der Paste auf 25-30 Pa·s eingestellt.

Die Paste wird im Siebdruck auf eine 1 mm dicke Edelstahlfolie (1.4301) in Form eines 5 mm breiten Ringes um eine runde Ausstanzung von 100 mm Durchmesser aufgedruckt und bei 150°C getrocknet. Die Trockenschichtdicke vor dem Löten beträgt 83 µm mit einer Dickenschwankung von ± 5µm. Nach dem Löten bei 1050°C im Durchlaufofen unter Wasserstoff beträgt die Schichtdicke im Mittel 70 µm, die Rauhigkeit liegt bei 12 µm. Die graphische Auswertung des Konturschriebs im Querschnitt durch den aufgelöteten Ring ergibt eine zur Folienoberfläche planparallele Breite von 3.1 mm.

## Patentansprüche

1. Siebdruckfähige Lotpaste zur Erzeugung konturengenauer geometrischer Metallstrukturen auf metallischen Unterlagen, enthaltend in einem organischen Bindersystem 80 bis 95 Gew.% eines Nickellotes, wobei die mittlerer Korngröße des Lotes zwischen 10 und 50 µm beträgt
**dadurch gekennzeichnet,**
**daß** das Nickellot ein Gemisch aus einem Nickelbasislot und einer pulverförmigen Legierung von Nickel mit einem der Elemente Chrom, Molybdän, Wolfram, Mangan oder Eisen als höherschmelzenden metallischen Füllstoff, ist,
**daß** das Massenverhältnis von Lot zu Füllstoff 2 bis 6:1, und das Korngrößenverhältnis, bezogen auf die mittlere Korngröße, von Lot zu Füllstoff 0,5 bis 2,5:1 beträgt.

2. Lotpaste nach Anspruch 1,
**dadurch gekennzeichnet,**
**daß** das Massenverhältnis zwischen Lot und Füllstoff 3,5 bis 4,5:1 beträgt.

3. Lotpaste nach den Ansprüchen 1 oder 2,
**dadurch gekennzeichnet,**
**daß** die mittlere Korngröße des Lotpulvers 25 bis 45 µm beträgt.

4. Lotpaste nach einem der Ansprüche 1 bis 3,
**dadurch gekennzeichnet,**
**daß** das Korngrößenverhältnis, bezogen auf die mittlere Korngröße, von Lot zu Füllstoff 1,0 bis 2,0:1 beträgt.

5. Lotpaste nach einem der Ansprüche 1 bis 4,
**dadurch gekennzeichnet,**
**daß** der Füllstoff eine Nickel-Chrom-Legierung ist.

6. Lotpaste nach einem der Ansprüche 1 bis 5,
**dadurch gekennzeichnet,**
**daß** das Lot ein Nickelbasislot der Zusammensetzung Ni82,4Cr7Fe3Si4,5B3,1 oder Ni76Cr14P10 und der Füllstoff eine Nickel-Chrom-Legierung der Zusammensetzung Ni80Cr20 ist.

7. Verwendung der Lotpaste gemäß den Ansprüchen 1 bis 6 zur Herstellung konturengenauer geometrischer Metallstrukturen auf metallischen Unterlagen durch Auftraglöten.

8. Verwendung nach Anspruch 7 zur Herstellung von Strukturen, die nach dem Verlöten Schichtdicken von 25 bis 250 µm, vorzugsweise 50 bis 150 µm, und eine Rauhtiefe (gemittelte Rauhtiefe R_{z} nach DIN 4768) von nicht mehr als 15 µm aufweisen.

9. Verfahren zur Herstellung konturengenauer geometrischer Metallstrukturen auf metallischen Unterlagen durch Auftraglöten,
**dadurch gekennzeichnet,**
**daß** man auf der Unterlage Strukturen mit einer Lotpaste gemäß den Ansprüchen 1 bis 6 durch Siebdruck aufträgt, die Strukturen trocknet und in einer anschließenden Wärmebehandlung das in der Lotpaste enthaltene organische Bindemittelsystem rückstandsfrei zersetzt und dann bis zur Verflüssigung des Lotmaterials erhitzt.

10. Verfahren nach Anspruch 9,
**dadurch gekennzeichnet,**
**daß** die Verlötung bei Temperaturen zwischen 850 und 1100°C erfolgt.

## Claims

1. A soldering paste which can be applied by screenprinting to produce contour-accurate geometric metal structures on metallic substrates, containing 80 to 95 wt.% of a nickel solder, wherein the average particle size of the solder is between 10 and 50 µm, in an organic binder system,
**characterised in that**
the nickel solder is a mixture of a nickel base solder and a powdered alloy of nickel with one of the elements chromium, molybdenum, tungsten, manganese or iron as a high-melting metallic filler, that the ratio by weight of solder to filler is 2 to 6 : 1 and that the ratio of the particle sizes, with respect to the average particle size, of solder to filler is 0.5 to 2.5 : 1.

2. A soldering paste according to Claim 1,
**characterised in that**
the ratio by weight of solder to filler is 3.5 to 4.5 : 1.

3. A soldering paste according to Claim 1 or 2,
**characterised in that**
the average particle size of the solder powder is 25 to 45 µm.

4. A soldering paste according to one of Claims 1 to 3,
**characterised in that**
the ratio of the particle size , with respect to the average particle size, of solder to filler is 1.0 to 2.0 : 1.

5. A soldering paste according to one of Claims 1 to 4,
**characterised in that**
the filler is a nickel-chromium alloy.

6. A soldering paste according to one of Claims 1 to 5,
**characterised in that**
the solder is a nickel base solder of the composition Ni82.4Cr7Fe3Si4.5B3.1 or Ni76Cr14P10 and the filler is a nickel-chromium alloy of the composition Ni80Cr20.

7. Use of the soldering paste according to Claims 1 to 6 to produce contour-accurate geometric metal structures on metallic substrates by build-up soldering.

8. Use in accordance with Claim 7 to produce structures which have, after soldering, layer thicknesses of 25 to 250 µm, preferably 50 to 150 µm, and a roughness height (mean roughness height R_{z} according to DIN 4768) of not more than 15 µm.

9. A process for producing contour-accurate geometric metal structures on metallic substrates by build-up soldering,
**characterised in that**
structures are built up on the substrate by screenprinting using a soldering paste in accordance with Claims 1 to 6, the structures are dried and, in a subsequent heat treatment, the organic binder system present in the soldering paste is decomposed to leave no residues and the solder material is then heated until it becomes liquid.

10. A process according to Claim 9,
**characterised in that**
soldering is performed at temperatures between 850 and 1100°C.

## Revendications

1. Pâte à souder permettant la sérigraphie pour générer des structures métalliques géométriques à contour précis sur des supports métalliques, comprenant dans un système de liants organiques entre 80 et 95 % en poids d'une brasure au nickel, dont la granulométrie moyenne de la brasure est comprise entre 10 et 50 µm,
**caractérisée en ce que**
la brasure de nickel est un mélange d'une brasure à base de nickel et d'un alliage pulvérulent de nickel avec l'un des éléments chrome, molybdène, tungstène, manganèse ou fer comme charge métallique à température de fusion élevée,
le rapport massique entre la brasure et la charge étant de 2 à 6:1, et le rapport de la taille des grains rapportée à la taille moyenne des grains de la brasure à la charge est de 0,5 à 2,5:1.

2. Pâte à souder selon la revendication 1,
**caractérisée en ce que**
le rapport massique entre la brasure et la charge est de 3,5 à 4,5:1.

3. Pâte à souder selon la revendication 1 ou 2,
**caractérisée en ce que**
la granulométrie moyenne de la poudre à souder est comprise entre 25 et 45 µm.

4. Pâte à souder selon l'une des revendications 1 à 3,
**caractérisée en ce que**
le rapport de la taille des grains, par rapport à la taille moyenne des grains entre la brasure et la charge est de 1,0 à 2,0:1.

5. Pâte à souder selon l'une des revendications 1 à 4,
**caractérisée en ce que**
la charge est un alliage nickel chrome.

6. Pâte à souder selon l'une des revendications 1 à 5,
**caractérisée en ce que**
la brasure est une brasure à base de nickel de composition suivante : Ni82, 4Cr7Fe3Si4,5B3,1, ou Ni76Cr14P10 et la charge est un alliage nickel-chrome de composition Ni80Cr20.

7. Application de la pâte à souder selon les revendications 1 à 6,
pour fabriquer les structures métalliques à contour géométrique précis sur des supports métalliques par brasure d'apport.

8. Application selon la revendication 7, pour la fabrication de structures qui, après brasure ont une épaisseur de couche de 25 à 250 µm, de préférence entre 50 et 150 µm et une profondeur de rugosité (profondeur de rugosité moyenne R_{z} selon la norme DIN 4768) qui ne dépasse pas 15 µm.

9. Procédé de fabrication de structures métalliques à contour géométrique précis sur des supports métalliques par brasure d'apport,
**caractérisé en ce que**
sur le support on applique des structures avec une pâte à souder selon les revendications 1 à 6 par sérigraphie, on sèche les structures et par un traitement thermique effectué ensuite on décompose le système de liant organique contenu dans la pâte à souder, sans laisser de résidu et ensuite on chauffe pour liquéfier la brasure.

10. Procédé selon la revendication 9,
**caractérisé en ce qu'**
on effectue la brasure à des températures comprises entre 850 et 1100°C.
